(19) Europäisches Patentamt / European Patent Office / Office européen des brevets

(11) **EP 4 553 115 A1**

(12) **EUROPEAN PATENT APPLICATION**
published in accordance with Art. 153(4) EPC

(43) Date of publication:
**14.05.2025 Bulletin 2025/20**

(51) International Patent Classification (IPC):
**C08L 67/03** (2006.01)    **C08K 7/06** (2006.01)
**C08L 25/04** (2006.01)    **C08L 67/02** (2006.01)
**C08L 69/00** (2006.01)

(21) Application number: 23835380.9

(22) Date of filing: 27.06.2023

(52) Cooperative Patent Classification (CPC):
**C08K 7/06; C08L 25/04; C08L 67/02; C08L 67/03; C08L 69/00**

(86) International application number:
**PCT/JP2023/023812**

(87) International publication number:
**WO 2024/009848 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: 04.07.2022  JP 2022108005
24.11.2022  JP 2022187417

(71) Applicant: **Mitsubishi Chemical Corporation**
**Tokyo 100-8251 (JP)**

(72) Inventor: **ISEKI, Shuta**
**Tokyo 100-8251 (JP)**

(74) Representative: **Hoffmann Eitle**
**Patent- und Rechtsanwälte PartmbB**
**Arabellastraße 30**
**81925 München (DE)**

(54) **RESIN COMPOSITION, PELLETS, AND MOLDED ARTICLE**

(57)    To provide a resin composition, and a pellet and molding formed from the resin composition. A resin composition comprising a polybutylene terephthalate resin having an intrinsic viscosity of 0.80 dL/g or less, a thermoplastic resin (X) having a lower SP value than the polybutylene terephthalate resin, where the SP value is a solubility parameter, and a carbon fiber, wherein a content of carbon fiber is 5 to 30 mass% in the resin composition, and wherein a mass ratio between the polybutylene terephthalate resin (PBT) having an intrinsic viscosity of 0.80 dL/g or less and the thermoplastic resin (X), i.e. X/PBT, is more than 0.1 and less than 1.0.

EP 4 553 115 A1

## Description

[Technical Field]

The present invention relates to a resin composition, a pellet, and a molding. The present invention relates particularly to a resin composition including a polybutylene terephthalate resin.

[Background Art]

Due to excellence in mechanical properties, electrical properties, heat resistance, etc., a polybutylene terephthalate resin is used in various applications such as electrical/electronic/OA equipment components and mechanical components.

Although having excellent properties, polybutylene terephthalate is easily charged with static electricity due to high electrical resistivity, so that various obstacles may be caused resulting from static electricity. For example, to the surface of a resin molding charged with static electricity (taking electrical charge), dirt or dust is attached to cause deterioration of the appearance, resulting in decrease of product value. In particular, in applications for electrical/electronic/OA equipment components, electrification of the resin molding may cause an erroneous operation resulting in a serious functional problem. Accordingly, a resin material having excellent conductivity with prevention of electrification is required.

On the other hand, in electrical/electronic/OA equipment, an electronic component inside a resin molding as housing generates electromagnetic waves. Accordingly, in order to prevent leakage of the electromagnetic waves to the outside of the equipment, a metal coating film is usually formed on the housing surface by a method such as plating and vapor deposition as electromagnetic wave shielding layer. In recent years, due to simplification of the product manufacturing process, diversification of product design, etc., a resin material itself of the housing having electromagnetic wave shielding properties, or a resin composition excellent in electromagnetic wave shielding properties has been required.

As the resin composition excellent in electromagnetic wave shielding properties, in Patent Literature 1, a thermoplastic resin composition including 50 to 95 wt% of polycarbonate resin (A1) and/or a polyester-based resin (A2) and 50 to 5 wt% of graphite (B), in which the polycarbonate resin (A1) and/or the polyester-based resin (A2) and graphite (B) with a water content of 0.2% or less are blended, is disclosed.

[Citation List]

[Patent Literature]

[Patent Literature 1]
Japanese Patent Laid-Open No. 2008-163270

[Summary of Invention]

[Technical Problem]

In Patent Literature 1, only an aspect with use of a polycarbonate resin as resin component is specifically examined. However, it is beneficial to provide a resin composition excellent in electromagnetic wave shielding properties utilizing the performance of a polybutylene terephthalate resin. Further, in some cases, fluidity is required for the resin composition including a polybutylene terephthalate resin.

Furthermore, in recent years, from the viewpoint of effective utilization of resources, use of recycled resins has been actively considered. However, in general, use of a recycled resin results in poor performance in comparison with a virgin resin.

In order to solve such a problem, an object of the present invention is to provide a resin composition excellent in electromagnetic wave shielding properties and fluidity, and a pellet and molding formed from the resin composition. Further, another object of the present invention is to provide a resin composition or the like made from recycled resin, which has performance comparative to those of virgin resin.

[Solution to Problem]

The present inventors conducted research to address the above-mentioned problems, and as a result, discovered that the problems described above could be solved by using a polybutylene terephthalate resin having a low intrinsic viscosity, blending a thermoplastic resin having a lower SP value than the polybutylene terephthalate resin (for example, polystyrene-based resin), and adjusting a blending ratio between the polybutylene terephthalate resin and a thermoplastic resin having a lower SP value than the polybutylene terephthalate resin (for example, polystyrene-based resin). Further, they discovered that a resin composition or the like, which has performance comparative to those of virgin resin, can be provided by using recycled polystyrene-based resin as polystyrene-based resin.

Specifically, the problems described above are solved by the following means.

<1> A resin composition comprising a polybutylene terephthalate resin having an intrinsic viscosity of 0.80 dL/g or less, a thermoplastic resin (X) having a lower SP value than the polybutylene terephthalate resin, where the SP value is a solubility parameter, and a carbon fiber,

wherein a content of carbon fiber is 5 to 30 mass% in the resin composition, and
a mass ratio between the polybutylene terephthalate resin (PBT) having an intrinsic viscosity of 0.80 dL/g or less and the thermoplastic resin (X), i.e. X/PBT, is more than 0.1 and less than 1.0.

<2> The resin composition according to <1>,
wherein the thermoplastic resin having a lower SP value than the polybutylene terephthalate resin comprises a polystyrene-based resin.
<3> The resin composition according to <1> or <2>,
wherein the thermoplastic resin (X) comprises a recycled product.
<4> The resin composition according to any one of <1> to <3>, further comprising a compatibilizer.
<5> The resin composition according to <4>,
wherein the compatibilizer comprises a polycarbonate resin.
<6> The resin composition according to <4> or <5>,
the compatibilizer comprises a polycarbonate resin that is a recycled product.
<7> The resin composition according to any one of <1> to <6>, for use in electromagnetic wave shielding.
<8> The resin composition according to any one of <1> to <7> for use in electromagnetic wave shielding,

wherein the thermoplastic resin (X) having a lower SP value than the polybutylene terephthalate resin comprises a polystyrene-based resin and also a compatibilizer, and
the compatibilizer comprises a polycarbonate resin.

<9> The resin composition according to <8>,
wherein the thermoplastic resin (X) having a lower SP value than the polybutylene terephthalate resin comprises a recycled product.
<10> A resin composition comprising a polybutylene terephthalate resin having an intrinsic viscosity of 0.80 dL/g or less, a polystyrene-based resin, and a carbon fiber,

wherein a content of carbon fiber is 5 to 30 mass% in the resin composition, and
a mass ratio between the polybutylene terephthalate resin (PBT) having an intrinsic viscosity of 0.80 dL/g or less and the polystyrene-based resin, i.e. PS/PBT, is more than 0.1 and less than 1.0.

<11> The resin composition according to <10>,
wherein the polystyrene-based resin comprises a recycled product.
<12> A pellet formed from the resin composition according to any one of <1> to <11>.
<13> A molding formed from the resin composition according to any one of <1> to <11>.
<14> A molding formed from the pellet according to <12>.

[Advantageous Effects of Invention]

The present invention enables a resin composition excellent in electromagnetic wave shielding properties and fluidity, and a pellet and molding formed from the resin composition to be provided. In particular, a resin composition or the like made from recycled resin, which has performance comparative to those of virgin resin, can be provided.

[Description of Embodiment]

Hereinafter, the embodiment of the present invention (hereinafter, referred to simply as "present embodiment") is described in detail. The present embodiment described below is an example for describing the present invention, and the present invention is not limited only to the present embodiment.

In the present specification, the term "to" is used to include that the prefix and postfix numerical values thereof as the lower limit and the upper limit.

In the present specification, various physical properties and characteristic values are ones at 23°C, unless otherwise specified.

In the present specification, the weight average molecular weight and the number average molecular weight are in terms of polystyrene, as measured by GPC (gel permeation chromatography), unless otherwise specified.

In the case where the measurement methods and the like described in the standards shown in the present specification differ from year to year, unless otherwise stated, those measurement standards are based on the standards as of January 1, 2022.

The resin composition of the present embodiment includes a polybutylene terephthalate resin having an intrinsic viscosity of 0.80 dL/g or less, a thermoplastic resin (X) having a lower SP value than the polybutylene terephthalate resin, where the SP value is a solubility parameter, and a carbon fiber, wherein a content of carbon fiber is 5 to 30 mass% in the resin composition, and wherein a mass ratio between the polybutylene terephthalate resin (PBT) having an intrinsic viscosity of 0.80 dL/g or less and the thermoplastic resin (X), i.e. X/PBT, is more than 0.1 and less than 1.0. With such a constitution, a resin composition excellent in electromagnetic wave shielding properties and fluidity can be obtained. Further, a resin composition excellent in various mechanical strength including impact resistance and heat resistance can be obtained.

Blending carbon fibers with a polybutylene terephthalate resin allows the electromagnetic wave shielding properties to be achieved to some extent. In the present embodiment, it is further presumed that use of a polybutylene terephthalate resin having a low intrinsic viscosity effectively suppresses breakage of carbon fibers during melt kneading and injection molding, so that the carbon fiber length in a molding can be kept relatively long, resulting in improved electromagnetic wave shielding properties. Furthermore, in the present embodiment, it is presumed that with a mass ratio between a polybutylene terephthalate resin (PBT) and a thermoplastic resin (X) having a lower SP value than the polybutylene terephthalate resin (for example, polystyrene-based resin (PS)), i.e. X/PBT, controlled to more than 0.1 and less than 1.0, the viscosity in a molten state can be further lowered, so that the electromagnetic wave shielding properties can be further improved.

In addition, use of a polybutylene terephthalate resin having a low intrinsic viscosity and a thermoplastic resin (X) (for example, polystyrene-based resin (PS)) at a predetermined ratio allows to obtain a resin composition excellent in fluidity and dimension stability.

<Polybutylene terephthalate resin having an intrinsic viscosity of 0.80 dL/g or less>

The resin composition of the present embodiment includes a polybutylene terephthalate resin having an intrinsic viscosity of 0.80 dL/g or less. By containing the polybutylene terephthalate resin having such a low intrinsic viscosity, a resin composition excellent in electromagnetic wave shielding properties can be obtained.

The polybutylene terephthalate resin for use in the resin composition of the present embodiment is a polyester resin having a structure with a terephthalic acid unit ester-bonded to a 1,4-butanediol unit, including in addition to a polybutylene terephthalate resin (homopolymer), a polybutylene terephthalate copolymer containing copolymer components other than the terephthalic acid unit and 1,4-butanediol unit, and a mixture of a homopolymer and a polybutylene terephthalate copolymer.

The polybutylene terephthalate resin may contain one or more dicarboxylic acid units other than terephthalic acid.

Specific examples of the other dicarboxylic acids include aromatic dicarboxylic acids such as isophthalic acid, orthophthalic acid, 1,5-naphthalene dicarboxylic acid, 2,5-naphthalene dicarboxylic acid, 2,6-naphthalene dicarboxylic acid, biphenyl-2,2'-dicarboxylic acid, biphenyl-3,3'-dicarboxylic acid, biphenyl-4,4'-dicarboxylic acid, bis(4,4'-carboxyphenyl)methane, anthracene dicarboxylic acid, and 4,4'-diphenyl ether dicarboxylic acid, alicyclic dicarboxylic acids such as 1,4-cyclohexane dicarboxylic acid and 4,4'-dicyclohexyl dicarboxylic acid, and aliphatic dicarboxylic acids such as adipic acid, sebacic acid, azelaic acid, and a dimer acid.

In the polybutylene terephthalate resin for use in the present embodiment, the terephthalic acid unit content in the entire dicarboxylic acid units is preferably 80 mol% or more, more preferably 90 mol% or more.

The diol unit may contain one or more diol units in addition to 1,4-butanediol.

Specific examples of the other diol units include aliphatic or alicyclic diols having 2 to 20 carbon atoms and bisphenol derivatives. Specific examples include ethylene glycol, propylene glycol, 1,5-pentanediol, 1,6-hexanediol, neopentyl glycol, decamethylene glycol, cyclohexane dimethanol, 4,4'-dicyclohexylhydroxymethane, 4,4'-dicyclohexylhydroxypropane, and ethylene oxide addition diol of bisphenol A. In addition to the bifunctional monomers described above, a small amount of trimellitic acid, trimesic acid, pyromellitic acid, or pentaerythritol for introducing a branched structure, trifunctional monomers such as trimethylolpropane, and monofunctional compounds such as fatty acids for molecular weight adjustment may be also used in combination.

In the polybutylene terephthalate resin for use in the present embodiment, the 1,4-butanediol unit content in the entire diol units is preferably 80 mol% or more, more preferably 90 mol% or more.

As described above, it is preferable that the polybutylene terephthalate resin be a polybutylene terephthalate homopolymer obtained by polycondensation of terephthalic acid and 1,4-butanediol. Alternatively, the polybutylene terephthalate copolymer may contain one or more dicarboxylic acids other than the terephthalic acid as carboxylic acid units and/or one or more diols other than the 1,4-butanediol as diol units. In the case where the polybutylene terephthalate resin is a polybutylene terephthalate resin modified by copolymerization, specific examples of the preferred copolymers include polyester ether resins obtained by copolymerizing polyalkylene glycols, particularly polytetramethylene glycol, dimer acid-copolymerized polybutylene terephthalate resins, and isophthalic acid-copolymerized polybutylene terephthalate resin. In particular among them, it is preferable to use polyester ether resins obtained by copolymerizing polytetramethylene glycol.

Incidentally, these copolymers refer to those having a copolymerization amount of 1 mol% or more and less than 50 mol% in all the segments of the polybutylene terephthalate resin. In particular, the copolymerization amount is preferably 2 mol% or more and less than 50 mol%, more preferably 3 to 40 mol%, and still more preferably 5 to 20 mol%. With such a copolymerization ratio, the fluidity, toughness, and tracking resistance tend to be preferably improved.

The amount of the terminal carboxyl group in the polybutylene terephthalate resin may be appropriately selected and determined to be usually 60 eq/ton or less, preferably 50 eq/ton or less, and more preferably 30 eq/ton or less. With an amount equal to or less than the upper limit, the alkali resistance and hydrolysis resistance tend to be improved. The lower limit of the amount of the terminal carboxyl group is not particularly specified, and usually 10 eq/ton or more in consideration of productivity of the polybutylene terephthalate resin.

The amount of terminal carboxyl group in the polybutylene terephthalate resin is a value measured by dissolving 0.5 g of polybutylene terephthalate resin in 25 mL of benzyl alcohol and titrating with 0.01 mol/L sodium hydroxide benzyl alcohol solution. As a method for adjusting the amount of the terminal carboxyl groups, any conventionally known method such as a method of adjusting polymerization conditions such as the raw material charge ratio, the polymerization temperature, and a decompression method during polymerization, and a method for reacting with a terminal blocking agent.

The intrinsic viscosity of the polybutylene terephthalate resin is 0.80 dL/g or less, preferably 0.75 dL/g or less, more preferably 0.72 dL/g or less. With the intrinsic viscosity equal to or less than the upper limit value, the breakage of the carbon fiber in a molten state can be effectively suppressed, so that the electromagnetic wave shielding properties tend to be improved. Also, the lower limit value is, for example, preferably 0.4 dL/g or more, more preferably 0.5 dL/g or more, and still more preferably 0.6 dL/g or more. With the intrinsic viscosity equal to or more than the lower limit value, the mechanical properties tend to improve.

The intrinsic viscosity of the polybutylene terephthalate resin is a value measured at 30°C in a mixed solvent of tetrachloroethane and phenol at a mass ratio of 1:1.

The polybutylene terephthalate resin may be produced by melt-polymerizing dicarboxylic acid components mainly composed of terephthalic acid or an ester derivative thereof and diol components mainly composed of 1,4-butanediol in a batch or continuous method. Further, after producing a polybutylene terephthalate resin having a low molecular weight by melt polymerization, the degree of polymerization (or molecular weight) may be increased to a desired value by solid-phase polymerization under a nitrogen stream or under reduced pressure.

It is preferable that the polybutylene terephthalate resin be produced by continuous melt polycondensation of a dicarboxylic acid component mainly composed of terephthalic acid and a diol component mainly composed of 1,4-butanediol.

The catalyst used for the esterification reaction may be a conventionally known one, and examples thereof include titanium compounds, tin compounds, magnesium compounds, and calcium compounds. In particular among these, titanium compounds are preferred. Specific examples of the titanium compounds as the esterification catalyst include titanium alcoholates such as tetramethyl titanate, tetraisopropyl titanate and tetrabutyl titanate, and titanium phenolates such as tetraphenyl titanate.

The content of the polybutylene terephthalate resin in the resin composition of the present embodiment is preferably 30 mass% or more, more preferably 35 mass% or more, still more preferably 37 mass% or more, and further preferably 40 mass% or more. Also, the content of the polybutylene terephthalate resin is preferably 65 mass% or less, more preferably 62 mass% or less, still more preferably 60 mass% or less, further preferably 58 mass% or less, and furthermore preferably 52 mass% or less.

<Thermoplastic resin (X) having a lower SP value than polybutylene terephthalate resin>

The resin composition of the present embodiment incudes a thermoplastic resin (X) having a lower SP value than the polybutylene terephthalate resin. An alloy with a resin composition having a lower SP value than the polybutylene terephthalate resin blended allows the carbon fibers in a resin composition or a molding to be overconcentrated relatively in a polybutylene terephthalate resin region rather than a thermoplastic resin (X) region, so that the carbon fibers are more effectively dispersed in the resin composition or molding to exhibit the effect of the present invention more effectively. As a result, it is presumed that the electromagnetic wave shielding properties can be further improved. Also, the fluidity of the resin composition can be further improved.

Furthermore, the thermoplastic resin (X) for use in the present embodiment includes a recycled product (recycled thermoplastic resin (X)). In the resin composition of the present embodiment, even though a recycled product is used as the thermoplastic resin (X) (for example, polystyrene-based resin (PS)), performance equivalent to the case of using a virgin product of thermoplastic resin (X) (for example, polystyrene-based resin (PS)) can be achieved.

In the present embodiment, the SP value is a solubility parameter, which can be calculated by determining the solubility in a solvent having a known SP value and using Hansen Solubility Parameter in Practice, ver. 5.0 based thereon.

The thermoplastic resin (X) may be used without specific limitation, as long as it has a lower SP value than the polybutylene terephthalate resin.

In the present embodiment, the ratio between the SP value of the polybutylene terephthalate resin and the SP value (X) of the thermoplastic resin (X), i.e. X/PBT, is more than 0.1 and less than 1.0. With the ratio in the range, the electromagnetic wave shielding properties tend to improve.

The X/PBT is preferably 0.2 or more, more preferably 0.3 or more, still more preferably 0.4 or more, and may be 0.5 or more, or may be 0.7 or more. Also, the X/PBT is preferably 0.9 or less, more preferably 0.8 or less.

Preferred examples of the thermoplastic resin (X) for use in the present embodiment include a polyester resin (thermoplastic polyester resin); a polyamide resin; a polycarbonate resin; a polystyrene-based resin; a polyolefin resin such as a polyethylene resin, a polypropylene resin, and a cyclic cycloolefin resin; a polyacetal resin; a polyimide resin; a polyether imide resin; a polyurethane resin; a polyphenylene ether resin; a polyphenylene sulfide resin; a polysulfone resin; and a polymethacrylate resin. It is more preferable that the thermoplastic resin (X) be selected from a polyester resin, a polystyrene-based resin, and a polyolefin resin.

An example of the thermoplastic resin (X) for use in the present embodiment is selected from a polyester resin and a polystyrene-based resin.

Another example of the thermoplastic resin (X) for use in the present embodiment is selected from a polyolefin resin and a polystyrene-based resin, and selection from a polyolefin-based elastomer and a styrene-based elastomer is preferred.

In the present embodiment, the thermoplastic resin (X) includes more preferably a polystyrene-based resin, and still more preferably HIPS (preferably butadiene rubber-containing polystyrene).

Examples of the polystyrene-based resins include homopolymers of styrene-based monomers, and copolymers of a styrene-based monomer and a monomer copolymerizable with the styrene-based monomer. Examples of the styrene-based monomers include styrene, α-methylstyrene, chlorostyrene, methylstyrene, and tert-butylstyrene. In the polystyrene-based resin in the present embodiment, 50 mol % or more of the monomer units are styrene-based monomers.

Preferred examples of the polystyrene-based resin for use in the present embodiment include a styrene-based elastomer.

More specific examples of the polystyrene-based resins include resins such as polystyrene resins, acrylonitrile-styrene copolymers (AS resins), highly impact-resistant polystyrene resins (HIPS), acrylonitrile-butadiene-styrene copolymers (ABS resins), acrylonitrile-acrylic rubber-styrene copolymers (AAS resins), acrylonitrile-styrene-acrylic rubber copolymers (ASA resins), acrylonitrile-ethylene propylene-based rubber-styrene copolymers (AES resins), and styrene-IPN type rubber copolymers.

In the present embodiment, the polystyrene-based resins are preferably acrylonitrile-styrene copolymers (AS resins), General purpose polystyrene (GPPS), highly impact-resistant polystyrene resins (HIPS), acrylonitrile-butadiene-styrene copolymers (ABS resins), acrylonitrile-acrylic rubber-styrene copolymers (AAS resins), acrylonitrile-styrene-acrylic rubber copolymers (ASA resins), acrylonitrile-ethylene propylene-based rubber-styrene copolymers (AES resins), and styrene-IPN type rubber copolymer are preferred, general purpose polystyrenes (GPPS) and highly impact-resistant polystyrene resins (HIPS) are more preferred, and general purpose polystyrenes (GPPS) are still more preferred.

In the case where the polystyrene-based resin contains a rubber component, the rubber component content in the polystyrene-based resin is preferably 3 to 70 mass%, more preferably 5 to 50 mass%, and still more preferably 7 to 30 mass%. With a rubber component content of 3 mass% or more, the impact resistance tends to be improved, and with a content of 50 mass% or less, the flame retardancy tends to be preferably improved. Further, the average particle size of the rubber component is preferably 0.05 to 10 μm, more preferably 0.1 to 6 μm, and still more preferably 0.2 to 3 μm. With an average particle size of 0.05 μm or more, the impact resistance tends to be improved, and with an average particle size of 10 μm or less, the appearance tends to be preferably improved.

The weight average molecular weight of the polystyrene-based resin is usually 50000 or more, preferably 100000 or more, more preferably 150000 or more, and usually 500000 or less, preferably 400000 or less, more preferably 300000 or less. Further, the number average molecular weight is usually 10000 or more, preferably 30000 or more, more preferably 50000 or more, and preferably 500000 or less, more Preferably 300000 or less.

The melt flow rate (MFR) of the polystyrene-based resin measured according to JIS K7210 (temperature: 200°C, load: 5 kgf) is preferably 0.1 to 30 g/10 minutes, and more preferably 0.5 to 25 g/10 minutes. With an MFR of 0.1 g/10 minutes or more, the fluidity tends to be improved, and with an MFR of 30 g/10 minutes or less, the impact resistance tends to be improved.

Examples of the methods for producing the polystyrene-based resins include known methods such as emulsion polymerization, solution polymerization, suspension polymerization, and bulk polymerization.

The polyolefin resin is preferably a resin with a content of olefins such as ethylene, propylene and 1-butene of 50 mass% or more (preferably 60 mass% or more, more preferably 70 mass% or more, still more preferably 90 mass% or more). More specific examples include polyethylene, polypropylene, and an ethylene-propylene copolymer. Alternatively the polyolefin resin may be a polyolefin-based elastomer.

Examples of the recycled thermoplastic resin (for example, recycled polystyrene-based resin and/or recycled polystyrene resin, preferably recycled polystyrene-based resin) include ones obtained through material recycling in which collected moldings of used thermoplastic resin (for example, used polystyrene-based resin) are pulverized and washed for reuse, ones obtained through chemical recycling (chemical decomposition method), and ones obtained through mechanical recycling.

In chemical recycling, collected moldings of used thermoplastic resin (for example, used polystyrene-based resin) are chemically decomposed into a level of raw materials for resynthesis of a thermoplastic resin (for example, recycled polystyrene-based resin). On the other hand, in mechanical recycling, by rigorously performing alkaline washing or by vacuum drying at high temperature in the material recycling, the dirt on the molding of thermoplastic resin (for example, polystyrene-based resin) can be more surely removed.

For example, after removal of foreign materials from a molding of used thermoplastic resin (for example, used polystyrene-based resin), the molding is pulverized/washed and then pelletized by an extruder to obtain a recycled thermoplastic resin (for example, recycled polystyrene-based resin).

As the thermoplastic resin (X) (preferably polystyrene-based resin), the resin composition of the present embodiment may contain a recycled product alone or may contain both a recycle product and a virgin product. In the present embodiment, relative to 100 parts by mass of the thermoplastic resin (X) (preferably polystyrene-based resin) contained in the resin composition, the content of the recycled products is preferably 50 to 100 parts by mass, more preferably 80 to 100 parts by mass, and still more preferably 90 to 100 parts by mass.

The total content of the polybutylene terephthalate resin and the thermoplastic resin (X) (preferably polystyrene-based resin) in the resin composition of the present embodiment is preferably 50 mass% or more, more preferably 55 mass% or more, still more preferably 60 mass% or more, further preferably 65 mass% or more, and furthermore preferably 70 mass% or more. With a content equal to or more than the lower limit, the fluidity of the resin composition tends to further improve. Also, the total content of the polybutylene terephthalate resin and the thermoplastic resin (X) (preferably polystyrene-based resin) in the resin composition of the present embodiment is preferably 90 mass% or less, more preferably 85 mass% or less, still more preferably 83 mass% or less, and further preferably 80 mass% or less. With a content equal to or less than the upper limit value, the mechanical strength tends to further improve.

The resin composition of the present embodiment may contain only one type of polybutylene terephthalate resin and thermoplastic resin (X) (preferably polystyrene-based resin) each, or may contain two or more types.

<Carbon fiber>

The resin composition of the present embodiment contains carbon fiber. By containing carbon fiber, the resulting molding has improved electromagnetic wave shielding properties.

The type of carbon fiber is not particularly specified, and both a polyacrylonitrile-based carbon fiber (PAN-based fiber) and a pitch-based carbon fiber made from pitch are preferably used. A polyacrylonitrile-based carbon fiber (PAN-based fiber) is more preferred.

Also, a carbon fiber having a tensile strength of 5.0 GPa or less (preferably 3.5 to 5.0 GPa) in the measurement of carbon fiber according to JIS R7601 at 23°C may be used.

The carbon fiber is preferably a chopped strand.

The carbon fiber has a lower limit of the number average fiber length (cut length) of preferably 2 mm or more, more preferably 3 mm or more. The upper limit of the number average fiber length is preferably 10 mm or less, more preferably 8 mm or less, and still more preferably 7 mm or less.

The carbon fiber having a number average fiber diameter of 3 to 20 μm is preferred, and the carbon fiber having a number average fiber diameter of 5 to 15 μm is more preferred. By using the carbon fiber in the range, the resulting molding achieves a good balance between the mechanical strength and the appearance.

Specific examples of the carbon fiber include Torayca manufactured by Toray Industries, Inc., Besfight filament manufactured by Toho Tenax Co., Ltd., and Pyrofil manufactured by Mitsubishi Chemical Corporation.

The content of the carbon fiber in the resin composition of the present embodiment is 5 mass% or more, preferably 10 mass% or more, more preferably 11 mass% or more, still more preferably 12 mass% or more, further preferably 12.5 mass% or more, furthermore preferably 13 mass% or more, and even furthermore preferably 14 mass% or more. With a content equal to or more than the lower limit value, the electromagnetic wave shielding properties tend to further improve. Also, the upper limit of the content of the carbon fiber in the resin composition is 30 mass% or less, preferably 28 mass% or less, more preferably 26 mass% or less, still more preferably 24 mass% or less, further preferably 22 mass% or less, and furthermore preferably 21 mass% or less. With a content equal to or less than the upper limit value, the fluidity during molding tends to improve.

The resin composition of the present embodiment may contain one type of carbon fiber alone, or may contain two or more types. In the case of containing two or more types, it is preferable that the total amount be in the range.

<Compatibilizer>

It is preferable that the resin composition of the present embodiment further contain a compatibilizer. The inclusion of a compatibilizer can facilitate the compatibilization of the polybutylene terephthalate resin and the thermoplastic resin(X) (preferably polystyrene-based resin), so that excellent mechanical strength and excellent appearance tend to be obtained.

The compatibilizer is not particularly limited as long as the compatibilization between the polybutylene terephthalate resin and the thermoplastic resin (X) (preferably polystyrene-based resin) can be achieved. In the present embodiment, a polymer compound-based compatibilizer is preferred from the viewpoint of heat resistance.

As the compatibilizer, a polycarbonate resin and/or styrene-maleic acid copolymer are preferred, and a polycarbonate resin is more preferred. The polycarbonate resin may be a recycled product (recycled polycarbonate resin).

The polycarbonate resin is an optionally branched thermoplastic polymer or copolymer obtained by reacting a dihydroxy compound or a dihydroxy compound plus a small amount of a polyhydroxy compound with phosgene or a carbonic acid diester.

The dihydroxy compound as raw material is a compound containing substantially no bromine atom, and preferably an aromatic dihydroxy compound. Specific examples thereof include 2,2-bis(4-hydroxyphenyl)propane (i.e. bisphenol A), tetramethyl bisphenol A, bis(4-hydroxyphenyl)-p-diisopropylbenzene, hydroquinone, resorcinol, and 4,4-dihydroxydiphenyl, and bisphenol A is preferred. A compound including one or more tetraalkyl phosphonium sulfonates bonded to the aromatic dihydroxy compound may be also used.

Among the polycarbonate resins described above, aromatic polycarbonate resins derived from 2,2-bis(4-hydroxyphenyl)propane, or aromatic polycarbonate copolymers derived from 2,2-bis(4-hydroxyphenyl)propane and other aromatic dihydroxy compounds are preferred. Alternatively, a copolymer mainly composed of an aromatic polycarbonate resin such as a copolymer including a polymer or oligomer having a siloxane structure may be employed. Furthermore, two or more of the polycarbonate resins described above may be mixed for use.

In order to adjust the molecular weight of polycarbonate resins, a monohydric aromatic hydroxy compound may be used, and examples thereof include m- and p-methyl phenols, m- and p-propyl phenols, p-tert-butyl phenol, and p-long-chain alkyl substituted phenols.

The polycarbonate resin has a viscosity average molecular weight (Mv) of preferably 10000 or more, more preferably 12000 or more, still more preferably 13000 or more, and particularly preferably more than 14000. With use of those having a viscosity average molecular weight of less than 10000, the resulting resin composition tends to have low mechanical strength such as impact resistance. Also, the Mv is preferably 60000 or less, more preferably 40000 or less, still more preferably 35000 or less, further preferably 30000 or less, and may be 25000 or less or 20000 or less. With use of those having an Mv of more than 60000, the fluidity of the resin composition is worsened, so that the moldability tends to be worsened in some cases.

In the present invention, the viscosity average molecular weight (Mv) of the polycarbonate resin is a value obtained from the calculation of the following Schnell viscosity equation based on the measurement of the viscosity of a methylene chloride solution of the polycarbonate resin at 25°C using an Ubbelohde viscometer to determine the intrinsic viscosity ($[\eta]$).

$$[\eta]=1.23\times10^{-4}Mv^{0.83}$$

The polycarbonate resin has a melt flow rate (MFR) measured according to JIS K7210 (temperature: 300°C, load: 1.20 kgf) of preferably 3 g/10 minutes or more, more preferably 6 g/10 minutes or more, still more preferably 10 g/10 minutes or more, and preferably 100 g/10 minutes or less, more preferably 70 g/10 minutes or less. With an MFR in the range, the effect of the present invention tends to be more effectively exhibited.

The polycarbonate resin has a melt volume rate (MVR) measured according to JIS K7210 (temperature: 300°C, load: 1.20 kgf) of preferably 0.5 to 20 cm$^3$g/10 minutes, more preferably 1 to 10 cm$^3$/10 minutes. With an MVR in the range, the effect of the present invention tends to be more effectively exhibited.

The method for producing the polycarbonate resin is not particularly limited, and polycarbonate resins produced by any of the phosgene method (interfacial polymerization method) or the melt method (transesterification method) may be used. Further, a polycarbonate resin prepared by subjecting the polycarbonate resin produced by a melting method to a post-treatment for adjusting the amount of terminal OH groups is also preferred.

Examples of the recycled polycarbonate resin include ones obtained through material recycling in which collected moldings of used polycarbonate resin are pulverized and washed for reuse, ones obtained through chemical recycling (chemical decomposition method), and ones obtained through mechanical recycling.

In chemical recycling, collected moldings of used polycarbonate resin are chemically decomposed into a level of raw materials for resynthesis of polycarbonate resin. On the other hand, in mechanical recycling, by rigorously performing alkaline washing or by vacuum drying at high temperature in the material recycling, the dirt on the molding of polycarbonate resin can be more surely removed.

For example, after removal of foreign materials from a molding of used polycarbonate resin, the molding is pulverized/washed and then pelletized by an extruder to obtain a recycled polycarbonate resin.

As the polycarbonate resin, the resin composition of the present embodiment may contain a recycled product alone or may contain both a recycle product and a virgin product. In the present embodiment, relative to 100 parts by mass of the polycarbonate resin contained in the resin composition, the content of the recycled products is preferably 50 to 100 parts by mass, more preferably 80 to 100 parts by mass, and still more preferably 90 to 100 parts by mass.

As for the styrene-maleic acid copolymer, the descriptions in paragraphs 0048 to 0050 of Japanese Patent Laid-Open No. 2020-176159 may be referred to, and the content thereof is incorporated herein.

In the case where the resin composition of the present embodiment contains a compatibilizer, the content thereof relative to 100 parts by mass of the total of the polybutylene terephthalate resin and the thermoplastic resin (X) (preferably polystyrene-based resin) is preferably 1 part by mass or more, more preferably 3 parts by mass or more, still more preferably 4 parts by mass or more, further preferably 5 parts by mass or more, and furthermore preferably 6 parts by mass or more. With a content equal to or more than the lower limit value, the compatibility between the polybutylene terephthalate resin and the thermoplastic resin (X) (preferably polystyrene-based resin) improves, so that the mechanical properties and appearance tend to be excellent. The upper limit value of the compatibilizer content relative to 100 parts by mass of the total of the polybutylene terephthalate resin and the thermoplastic resin (X) (preferably polystyrene-based resin) is preferably 30 parts by mass or less, more preferably 25 parts by mass or less, still more preferably 18 parts by mass or less, further preferably 15 parts by mass or less, and furthermore preferably 12 parts by mass or less. With a content equal to or less than the upper limit value, the electromagnetic wave shielding properties and fluidity can be further improved.

The resin composition of the present embodiment may contain one type of compatibilizer alone, or may contain two or more types. In the case of containing two or more types, it is preferable that the total amount be in the range.

<Other components>

The resin composition of the present embodiment may contain other components on an as needed basis in addition to those described above, as long as the desired physical properties are not significantly impaired. Examples of the other components include reinforcement materials other than carbon fiber (glass fiber or the like) and various resin additives. Only one type of the other components may be contained, or two or more types may be contained in any combination and at any ratio.

Examples of the various resin additives include stabilizers, mold release agents, fire retardants, reactable compounds, pigments, dyes, ultraviolet absorbers, antistatic agents, antifogging agents, antiblocking agents, fluidity improvers, plasticizers, dispersants, and antibacterial agents. The resin composition of the present embodiment preferably contains at least one of a stabilizer and a mold release agent.

The resin composition of the present embodiment is adjusted such that the total content of the polybutylene terephthalate resin, the thermoplastic resin (X) (preferably polystyrene-based resin), carbon fiber, and other optionally blended components is 100 mass%. In an example of the resin composition of the present embodiment, the total content of the polybutylene terephthalate resin, the thermoplastic resin (X) (preferably polystyrene-based resin), and carbon fiber is 95 mass% or more in the resin composition. In another example of the resin composition of the present embodiment, the total content of the polybutylene terephthalate resin, the thermoplastic resin (X) (preferably polystyrene-based resin), carbon fiber, and the stabilizer is 99 mass% or more in the resin composition.

<<Stabilizer>>

The resin composition of the present embodiment may contain a stabilizer. Examples of the stabilizers include hindered phenol-based compounds, hindered amine-based compounds, phosphorus-based compounds, and sulfur-based stabilizers. Among these, hindered phenol-based compounds are preferred. It is also preferable that hindered phenol-based compounds and phosphorus-based compounds be used in combination.

For specific stabilizers, the description in paragraphs 0046 to 0057 in Japanese Patent Laid-Open No. 2018-070722, the description in paragraphs 0030 to 0037 in Japanese Patent Laid-Open No. 2019-056035, and the description in paragraphs 0066 to 0078 in International Publication No. WO 2017/038949 may be referred to, and the contents thereof are incorporated herein.

In the resin composition of the present embodiment, the content of a stabilizer is preferably 0.01 parts by mass or more, more preferably 0.05 parts by mass or more, and still more preferably 0.08 parts by mass or more, relative to 100 parts by mass of the total of the polybutylene terephthalate resin and thermoplastic resin (X) (preferably polystyrene-based resin). The upper limit value of the content of the stabilizer is preferably 3 parts by mass or less, more preferably 2 parts by mass or less, and still more preferably 1 part by mass or less, relative to 100 parts by mass of the total of the polybutylene terephthalate resin and thermoplastic resin (X) (preferably polystyrene-based resin).

The resin composition of the present embodiment may contain only one stabilizer, or may contain two or more stabilizers. In the case where two or more types are included, it is preferable that the total content be within the range.

<<Release agent>>

It is preferable that the resin composition of the present embodiment contain a release agent.

As the mold release agent, a wide range of known mold release agents may be used. An esterified aliphatic carboxylic acid, a paraffin wax, a polystyrene wax and a polyolefin wax are preferred, and a polyethylene wax is more preferred.

For specific release agents, the description in paragraphs 0115 to 0120 of Japanese Patent Laid-Open No. 2013-007058, the description in paragraphs 0063 to 0077 of Japanese Patent Laid-Open No. 2018-070722, and the description in paragraphs 0090 to 0098 of Japanese Patent Laid-Open No. 2019-123809 may be referred to, and the contents thereof are incorporated herein.

The content of the mold release agent in the resin composition of the present embodiment is preferably 0.01 parts by mass or more, more preferably 0.08 parts by mass or more, and still more preferably 0.2 parts by mass or more, relative to 100 parts by mass of the total of polybutylene terephthalate resin and the thermoplastic resin (X) (preferably polystyrene-based resin). The upper limit value of the content of the mold release agent is preferably 5 parts by mass or less, more preferably 3 parts by mass or less, still more preferably 1 part by mass or less, and furthermore preferably 0.8 parts by mass or less, relative to 100 parts by mass of the total of polybutylene terephthalate resin and the thermoplastic resin (X) (preferably polystyrene-based resin).

The resin composition may contain only one release agent, or may contain two or more release agents. In the case where two or more types are included, it is preferable that the total content be within the range.

<Physical properties>

The resin composition of the present embodiment is excellent in electromagnetic wave shielding properties. Specifically, the electromagnetic wave shielding properties at a frequency of 100 MHz of the resin composition of the present embodiment are preferably - 40.0 or less, more preferably -41.0 or less, and still more preferably -42.0 or less. The lower limit value of the electromagnetic wave shielding properties is practically -55.0 or more, though not particularly specified.

Also, the electromagnetic wave shielding properties at a frequency of 200 MHz of the resin composition of the present embodiment are preferably -30.0 or less, more preferably -34.0 or less, still more preferably -36.0 or less, and may be -36.5 or less, -37.0 or less, or -37.5 or less, depending on the use or the like. The lower limit value of the electromagnetic wave shielding properties is practically -51.0 or more, though not particularly specified.

The resin composition of the present embodiment is excellent in impact resistance. Specifically, a molded ISO tensile test piece (thickness: 4 mm) has a notched Charpy impact strength according to ISO 179 of preferably 3 kJ/m$^2$ or more, more preferably 4 kJ/m$^2$ or more. The upper limit value is practically 10 kJ/m$^2$ or less, though the higher the better.

The resin composition of the present embodiment is excellent in heat resistance. Specifically, a molded ISO multi-purpose test piece (thickness: 4 mm) has a deflection temperature under load measured under conditions at a load of 1.80 MPa according to ISO 75-1 and ISO 75-2 of preferably 190°C or more, more preferably 191°C or more, still more preferably 192°C or more, and further preferably 195°C or more. The upper limit value is practically 230°C or less, though the higher the better.

The electromagnetic wave shielding properties, the Charpy impact strength (kJ/m$^2$), and the deflection temperature under load (DTUL) (°C) were measured according to the description in the following Examples.

<Method for producing resin composition>

The resin composition of the present embodiment may be produced by a conventional production method of resin compositions containing a thermoplastic resin. The resin composition is produced by feeding a polybutylene terephthalate resin, a thermoplastic resin (X) (preferably polystyrene-based resin), carbon fiber and other components blended on an as needed basis into an extruder and melt-kneading the mixture. A pellet is formed from such a resin composition as an embodiment.

Each component may be premixed and supplied to the extruder at once. Alternatively, each component without being premixed or with only a part of the components being premixed may be supplied to the extruder using a feeder. The extruder may be a single screw extruder or a twin screw extruder.

Further, it is preferable that the carbon fiber be supplied from a side feeder in the middle of the cylinder of the extruder.

The heating temperature for melt-kneading may be appropriately selected from the usual range of 150 to 350°C.

<Method for producing molding>

A molding of the present embodiment is formed from the resin composition or pellet of the present embodiment.

The method for producing a molding in the present embodiment is not particularly limited, and any forming method commonly used for resin compositions containing a thermoplastic resin may be employed. Examples thereof include injection molding, ultra-high speed injection molding, injection compression molding, two-color molding, hollow molding such as gas assist molding, forming using a heat insulating mold, forming using a rapid heat cycle mold, foam molding (including supercritical fluid), insert molding, IMC (in-mold coating molding) molding, extrusion molding method, sheet molding, thermoforming, rotational molding, laminate molding, press molding, and blow molding, and in particular, injection molding is preferred.

<Application field>

The applied field of the molding formed from the resin composition or pellet of the present embodiment is not particularly limited, and the molding is preferably used in applications requiring electromagnetic wave shielding properties (for use in electromagnetic wave shielding). Examples of the use requiring electromagnetic wave shielding properties include a housing, connector and packaging material of OA equipment, AV equipment, connector components, air purifiers, IoT home appliances (home appliances capable of internet connection), mobile communication equipment such as smart phones, radio base stations, measuring equipment, transportation equipment, communication equipment and radar equipment. In particular, examples of the use for automobiles include electronic control unit housing, a power control unit housing, a camera housing, and a battery cover for electric vehicles. Further, examples of the use include applications to automobiles requiring high rigidity.

[Examples]

The present invention is described more specifically with reference to Examples as follows. The materials, usage amounts, ratios, processing details, processing procedures, etc. shown in the following Examples may be appropriately changed without departing from the subject matter of the present invention. Accordingly, the scope of the present invention is not limited to the specific Examples shown below.

In the case where the measuring instruments and the like used in Examples are hardly available due to discontinued production, other instruments having equivalent performance may be used for the measurement.

1. Raw materials

The following raw materials were used.

[Table 1]

| Type | Abbreviation | Details |
|---|---|---|
| PBT | 5007 | Polybutylene terephthalate resin, Manufactured by Mitsubishi Engineering-Plastics Corporation, trade name: NOVADURAN "5007", Intrinsic viscosity: 0.70 dL/g |
| | 5008 | Polybutylene terephthalate resin, Manufactured by Mitsubishi Engineering-Plastics Corporation, trade name: NOVADURAN "5008", Intrinsic viscosity: 0.85 dL/g |
| | 5020 | Polybutylene terephthalate resin, Manufactured by Mitsubishi Engineering-Plastics Corporation, trade name: NOVADURAN "5020", Intrinsic viscosity: 1.20 dL/g |
| PC | H-4000 | Polycarbonate resin Manufactured by Mitsubishi Engineering-Plastics Corporation, trade name: Iupilon (registered trademark) H-4000, Viscosity average molecular weight: 16000 |
| | H-7000 | Polycarbonate resin Manufactured by Mitsubishi Engineering-Plastics Corporation, Iupilon (registered trademark) H-7000, Viscosity average molecular weight: 14000 |
| PS | HT478 | Impact resistant polystyrene resin Manufactured by PS Japan Corporation, HT478 |
| | HH105 | General-purpose polystyrene resin, Manufactured by PS Japan Corporation, HH-105 |
| | GPPS679 | General-purpose polystyrene resin, Manufactured by PS Japan Corporation, GPPS679 |
| PE | LJ803 | Low density polyethylene resin, Manufactured by Japan Polyethylene Corporation, Novatec LJ803 |
| Stabilizer | AO60 | Manufactured by ADEKA Corporation, Hindered phenol-based stabilizer Adekastab AO-60 |
| Mold release agent | 100P | Manufactured by Mitsui Chemicals, Inc., Polyethylene wax "100P" |
| Stabilizer | AX-71 | Manufactured by ADEKA Corporation, Phosphorus-based stabilizer "AX-71" |
| CF | TR06UL | Carbon fiber Manufactured by Mitsubishi Chemical Corporation, PAN-based carbon fiber chopped strand TR06UL, cut length: 6 mm |

Examples 1 to 12 and Comparative Examples 1 to 7

<Production of resin composition (pellet)>

The components each described in Table 1 were fed into a tumbler mixer made of stainless steel such that the blending amount shown in Table 2 to Table 5 is achieved (unit of blending amount: parts by mass), and stirred/mixed for 1 hour. The resulting mixture was supplied to an intermeshed co-rotation twin screw extruder ("TEX-30$\alpha$" manufactured by The Japan Steel Works, Ltd., screw diameter: 32 mm, L/D=42) through a main feed port. The barrel temperature of a first kneading unit was set to 270°C, and the mixture was melt-kneaded under the conditions at a discharge rate of 30 kg/h and a screw rotation speed of 200 rpm, and extruded as a strand through 5 nozzle holes (in circular shape (diameter: 4 mm, length 1.5 cm)). The extruded strand was introduced into a water tank to be cooled, and inserted into a pelletizer to be cut. Thereby, a resin composition (pellet) was obtained.

<Electromagnetic wave shielding properties>

The resulting resin pellets were dried at 120°C for 5 hours, and subjected to injection molding using an injection molding machine ("EC160" manufactured by Shibaura Machine Co., Ltd.) with a cylinder temperature at 260°C and a mold temperature at 80°C, so that a plate-like test piece having a size of 150 mm × 150 mm × 2 mm thick was obtained.
The electromagnetic wave shielding properties (electric field) of the resulting plate-like test piece were measured by KEC method. In the measurement, a network analyzer "N5230A" manufactured by Agilent Technologies was used.

The unit of the electromagnetic wave shielding properties is shown in (dB). The lower the value of the electromagnetic wave shielding properties, the better it is.

<Tensile strength, tensile elastic modulus, and tensile strain>

The resulting resin pellets were dried at 120°C for 5 hours, and subjected to injection molding using an injection molding machine ("J85AD" manufactured by The Japan Steel Works, Ltd.) with a cylinder temperature of 250°C and a mold temperature of 80°C, so that an ISO multi-purpose test piece (thickness: 4 mm) was obtained.
Using the molded ISO multi-purpose test piece, the tensile strength (unit: MPa), tensile elastic modulus (unit: MPa), and tensile strain (unit: %) were measured according to ISO 527-1 and ISO 527-2.

<Bending strength and bending elastic modulus>

From the resulting resin composition (pellet), an ISO tensile test piece having a thickness of 4 mm was produced using an injection molding machine (model SE50 manufactured by Sumitomo Heavy Industries, Ltd.) with an injection molding rate of 30 mm/sec, a screw diameter of 28 mm (injection rate: 18.5 cm$^3$/sec), a resin temperature of 260°C and a mold temperature of 80°C.
Using the ISO tensile test piece (thickness: 4 mm), the bending strength (unit: MPa) and the bending elastic modulus (unit: MPa) were measured at 23°C according to ISO 178.

<Charpy impact strength (with a notch)>

From the resulting resin composition (pellet), an ISO tensile test piece having a thickness of 4 mm was produced using an injection molding machine (model SE50 manufactured by Sumitomo Heavy Industries, Ltd.) with an injection molding rate of 30 mm/sec, a screw diameter of 28 mm (injection rate: 18.5 cm$^3$/sec), a resin temperature of 260°C and a mold temperature of 80°C.
Using the ISO tensile test piece (thickness: 4 mm), the Charpy impact strength (with a notch) was measured according to ISO 179. Incidentally, NB means nondestructive.
The unit is shown in kJ/m$^2$.

<Deflection temperature under load (DTUL)>

Using the ISO multipurpose test piece (thickness: 4mm), the deflection temperature under load (unit: °C) was measured under a load of 1.80 MPa according to ISO 75-1 and ISO 75-2.

<Peak pressure during injection molding (fluidity)>

The resulting resin pellets were dried at 120°C for 5 hours, and subjected to injection molding using an injection molding machine ("EC160" manufactured by Shibaura Machine Co., Ltd.) under conditions with a cylinder temperature of 260°C, a mold temperature of 80°C, and a filling time of 1.0 second, so that a plate-like test piece having a size of 150 mm × 150 mm × 2 mm thick was obtained. The unit of the injection peak pressure on this occasion is shown in (MPa).
It can be said that the lower the peak pressure is, the better the fluidity is.

[Table 2]

| | | | Example 1 | Example 2 | Example 3 | Example 4 | Example 5 | Example 6 |
|---|---|---|---|---|---|---|---|---|
| | PBT | 5007 | 47.64 | 50.64 | 50.64 | 42.2 | 47.64 | 67.52 |
| | | 5008 | | | | | | |
| | | 5020 | | | | | | |
| | PC | H-4000 | | | | 8.44 | | 8.44 |
| | | H-7000 | 7.94 | 8.44 | 8.44 | | 7.94 | |
| | PS | HT478 | 23.82 | | | | | |
| | | HH105 | | 25.32 | | | | |
| | | GPPS679 | | | 25.32 | 33.76 | 23.82 | 8.44 |

(continued)

| | | Example 1 | Example 2 | Example 3 | Example 4 | Example 5 | Example 6 |
|---|---|---|---|---|---|---|---|
| PE | LJ803 | | | | | | |
| Stabilizer | AO60 | 0.2 | 0.2 | 0.2 | 0.2 | 0.2 | 0.2 |
| Mold release agent | 100P | 0.3 | 0.3 | 0.3 | 0.3 | 0.3 | 0.3 |
| Stabilizer | AX-71 | 0.1 | 0.1 | 0.1 | 0.1 | 0.1 | 0.1 |
| CF | TR06UL | 20 | 15 | 15 | 15 | 20 | 15 |
| | Total | 100 | 100 | 100 | 100 | 100 | 100 |
| PBT Intrinsic viscosity (dL/g) | | 0.70 | 0.70 | 0.70 | 0.70 | 0.70 | 0.70 |
| Mass ratio X/PBT | | 0.5 | 0.5 | 0.5 | 0.8 | 0.5 | 0.13 |
| Electromagnetic wave shielding property | 100 MHz | -48.9 | -43.3 | -42.1 | -42.9 | -47.7 | -41.6 |
| | 200 MHz | -44.0 | -36.8 | -37.5 | -38.0 | -41.7 | -35.9 |
| | 800 MHz | -39.1 | -29.6 | -30.4 | -30.3 | -36.9 | -29.5 |
| Tensile strength (MPa) | | 163 | 163 | 162 | 163 | 181 | - |
| Tensile strain (%) | | 2 | 3 | 3 | 3 | 3 | - |
| Tensile elastic modulus (MPa) | | 16420 | 11890 | 12090 | 13750 | 17630 | - |
| Bending strength (MPa) | | 234 | 229 | 224 | 227 | 248 | 233 |
| Bending elastic modulus (MPa) | | 15560 | 12980 | 12860 | 13510 | 16460 | 12710 |
| Charpy impact strength (kJ/m$^2$) | | 5 | 4 | 4 | 5 | 5 | - |
| DTUL (°C) | | 203 | 198 | 198 | 192 | 202 | 204 |
| Peak pressure during injection molding (MPa) | | 62 | 59 | 53 | 61 | 65 | 60 |

[Table 3]

| | | Example 7 | Example 8 | Example 9 | Comparative Example 1 | Comparative Example 2 |
|---|---|---|---|---|---|---|
| PBT | 5007 | 59.08 | 50.64 | 50.64 | 47.72 | 47.72 |
| | 5008 | | | | | |
| | 5020 | | | | | |
| PC | H-4000 | 8.44 | | | 31.68 | |
| | H-7000 | | | | | 31.68 |
| PS | HT478 | | | | | |
| | HH105 | | | | | |
| | GPPS679 | 16.88 | | | | |
| PE | LJ803 | | 33.76 | 16.88 | | |
| Stabilizer | AO60 | 0.2 | 0.2 | 0.2 | 0.2 | 0.2 |
| Mold release agent | 100P | 0.3 | 0.3 | 0.3 | 0.3 | 0.3 |
| Stabilizer | AX-71 | 0.1 | 0.1 | 0.1 | 0.1 | 0.1 |
| CF | TR06UL | 15 | 15 | 15 | 20 | 20 |
| | Total | 100 | 100 | 100 | 100 | 100 |

(continued)

|  |  | Example 7 | Example 8 | Example 9 | Comparative Example 1 | Comparative Example 2 |
|---|---|---|---|---|---|---|
| PBT Intrinsic viscosity (dL/g) | | 0.70 | 0.70 | 0.70 | 0.70 | 0.70 |
| Mass ratio X/PBT | | 0.29 | 0.67 | 0.33 | 0 | 0 |
| Electromagnetic wave shielding property | 100 MHz | -41.4 | -41.4 | -43.0 | -43.3 | -42.9 |
| | 200 MHz | -36.2 | -36.3 | -38.5 | -36.8 | -38.3 |
| | 800 MHz | -29.7 | -28.0 | -30.1 | -31.3 | -33.0 |
| Tensile strength (MPa) | | - | 88 | 124 | 176 | 173 |
| Tensile strain (%) | | - | 2 | 3 | 2 | 2 |
| Tensile elastic modulus (MPa) | | - | 11100 | 12800 | 16800 | 17790 |
| Bending strength (MPa) | | 227 | 136 | 195 | 246 | 243 |
| Bending elastic modulus (MPa) | | 12630 | 13160 | 10740 | 16090 | 16150 |
| Charpy impact strength (kJ/m$^2$) | | - | - | - | 5 | 6 |
| DTUL (°C) | | 201 | - | - | 214 | 202 |
| Peak pressure during injection molding (MPa) | | 58 | 40 | 45 | 88 | 79 |

[Table 4]

|  |  | Comparative Example 3 | Comparative Example 4 | Comparative Example 5 | Comparative Example 6 | Comparative Example 7 |
|---|---|---|---|---|---|---|
| PBT | 5007 | | | 25.32 | 25.32 | |
| | 5008 | 50.64 | 21.1 | | | 79.5 |
| | 5020 | | 21.1 | | | |
| PC | H-4000 | | 8.44 | 8.44 | | |
| | H-7000 | 8.44 | | | 8.44 | |
| PS | HT478 | | | | | |
| | HH105 | | 33.76 | 50.64 | | |
| | GPPS679 | 25.32 | | | 50.64 | |
| PE | LJ803 | | | | | |
| Stabilizer | AO60 | 0.2 | 0.2 | 0.2 | 0.2 | 0.2 |
| Mold release agent | 100P | 0.3 | 0.3 | 0.3 | 0.3 | 0.3 |
| Stabilizer | AX-71 | 0.1 | 0.1 | 0.1 | 0.1 | |
| CF | TR06UL | 15 | 15 | 15 | 15 | 20 |
| | Total | 100 | 100 | 100 | 100 | 100 |
| PBT Intrinsic viscosity (dL/g) | | 0.85 | 1.01 | 0.70 | 0.70 | 0.85 |
| Mass ratio X/PBT | | 0.5 | 0.8 | 2 | 2 | 0 |
| Electromagnetic wave shielding property | 100 MHz | -39.2 | -29.3 | -32.9 | -37.3 | -41.3 |
| | 200 MHz | -33.5 | -25.4 | -29.1 | -32.1 | -36.8 |
| | 800 MHz | -26.5 | -21.5 | -23.4 | -25.5 | -31.6 |
| Tensile strength (MPa) | | 165 | - | 161 | 152 | 170 |
| Tensile strain (%) | | 3 | - | 3 | 3 | 3 |

(continued)

|  | Comparative Example 3 | Comparative Example 4 | Comparative Example 5 | Comparative Example 6 | Comparative Example 7 |
|---|---|---|---|---|---|
| Tensile elastic modulus (MPa) | 12340 | - | 13650 | 13090 | 17820 |
| Bending strength (MPa) | 232 | 235 | 224 | 209 | 234 |
| Bending elastic modulus (MPa) | 13090 | 13590 | 13780 | 14060 | 14870 |
| Charpy impact strength (kJ/m$^2$) | 4 |  | 5 | 7 | 5 |
| DTUL (°C) | 192 | 177 | 156 | 164 | 215 |
| Peak pressure during injection molding (MPa) | 59 | 76 | 60 | 42 | 101 |

[Table 5]

|  |  | Example 10 | Example 11 | Example 12 |
|---|---|---|---|---|
| PBT | 5007 | 42.2 | 42.2 | 42.2 |
| PC | PC3011 | 8.44 | 8.44 | 8.44 |
| PS | HH105 |  |  | 33.76 |
| | PS1GER100 |  | 33.76 |  |
| | T301 | 33.76 |  |  |
| Stabilizer | AO60 | 0.2 | 0.2 | 0.2 |
| Mold release agent | 100P | 0.3 | 0.3 | 0.3 |
| Stabilizer | AX-71 | 0.1 | 0.1 | 0.1 |
| CF | TR06UL | 15 | 15 | 15 |
| | Total | 100 | 100 | 100 |
| PBT Intrinsic viscosity (dL/g) |  | 0.70 | 0.70 | 0.70 |
| Mass ratio X/PBT |  | 0.8 | 0.8 | 0.8 |
| Electromagnetic wave shielding property | 100 MHz | -41.8 | -42.0 | -41.5 |
| | 200 MHz | -38.1 | -37.9 | -37.7 |
| | 800 MHz | -30.0 | -30.2 | -29.9 |
| Tensile strength (MPa) |  | 160 | 158 | 157 |
| Tensile strain (%) |  | 3 | 3 | 3 |
| Tensile elastic modulus (MPa) |  | 13530 | 13500 | 13490 |
| Bending strength (MPa) |  | 222 | 224 | 223 |
| Bending elastic modulus (MPa) |  | 13490 | 13300 | 13580 |
| Charpy impact strength |  | 4 | 4 | 5 |
| DTUL (°C) |  | 193 | 193 | 194 |
| Peak pressure during injection molding (MPa) |  | 63 | 64 | 61 |

In the Tables, X/PBT is a mass ratio between the polybutylene terephthalate resin (PBT) and the thermoplastic resin (X).

As clearly shown in the results, the resin composition of the present invention was excellent in the electromagnetic wave shielding properties and fluidity. Further, the resin composition was excellent also in mechanical strength and heat resistance (Examples 1 to 12).

In particular, even though a recycled resin was used as the polystyrene-based resin, performance equivalent to the case of using a virgin polystyrene-based resin was achieved (Examples 10 and 11).

In contrast, in the case of containing no polystyrene-based resin (Comparative Examples 1 and 2), the fluidity was poor. Also, in the case where the polybutylene terephthalate resin had a high viscosity (Comparative Examples 3 and 4), the electromagnetic wave shielding properties were poor. On the other hand, in the case of having a too high ratio of the polystyrene-based resin relative to the polybutylene terephthalate resin (Comparative Examples 5 and 6), the electromagnetic wave shielding properties were poor. Further, in the case of containing no compatibilizer (Comparative Example 7), the fluidity was poor.

**Claims**

1. A resin composition comprising a polybutylene terephthalate resin having an intrinsic viscosity of 0.80 dL/g or less, a thermoplastic resin (X) having a lower SP value than the polybutylene terephthalate resin, where the SP value is a solubility parameter, and a carbon fiber,

    wherein a content of carbon fiber is 5 to 30 mass% in the resin composition, and
    a mass ratio between the polybutylene terephthalate resin (PBT) having an intrinsic viscosity of 0.80 dL/g or less and the thermoplastic resin (X), i.e. X/PBT, is more than 0.1 and less than 1.0.

2. The resin composition according to claim 1,
    wherein the thermoplastic resin having a lower SP value than the polybutylene terephthalate resin comprises a polystyrene-based resin.

3. The resin composition according to claim 1 or 2,
    wherein the thermoplastic resin (X) comprises a recycled product.

4. The resin composition according to claim 1 or 2, further comprising a compatibilizer.

5. The resin composition according to claim 4,
    wherein the compatibilizer comprises a polycarbonate resin.

6. The resin composition according to claim 4,
    wherein the compatibilizer comprises a polycarbonate resin that is a recycled product.

7. The resin composition according to claim 1 or 2, for use in electromagnetic wave shielding.

8. The resin composition according to claim 1 for use in electromagnetic wave shielding,

    wherein the thermoplastic resin (X) having a lower SP value than the polybutylene terephthalate resin comprises a polystyrene-based resin and also a compatibilizer, and
    the compatibilizer comprises a polycarbonate resin.

9. The resin composition according to claim 8,
    wherein the thermoplastic resin (X) having a lower SP value than the polybutylene terephthalate resin comprises a recycled product.

10. A resin composition comprising a polybutylene terephthalate resin having an intrinsic viscosity of 0.80 dL/g or less, a polystyrene-based resin, and a carbon fiber,

    wherein a content of carbon fiber is 5 to 30 mass% in the resin composition, and
    a mass ratio between the polybutylene terephthalate resin (PBT) having an intrinsic viscosity of 0.80 dL/g or less and the polystyrene-based resin, i.e. PS/PBT, is more than 0.1 and less than 1.0.

11. The resin composition according to claim 10,
    wherein the polystyrene-based resin comprises a recycled product.

12. A pellet formed from a resin composition according to any one of claims 1, 2, and 8 to 11.

13. A molding formed from a resin composition according to any one of claims 1, 2, and 8 to 11.

**14.** A molding formed from a pellet according to claim 12.

## INTERNATIONAL SEARCH REPORT

| | International application No. |
|---|---|
| | **PCT/JP2023/023812** |

**A. CLASSIFICATION OF SUBJECT MATTER**

***C08L 67/03***(2006.01)i; ***C08K 7/06***(2006.01)i; ***C08L 25/04***(2006.01)i; ***C08L 67/02***(2006.01)i; ***C08L 69/00***(2006.01)i
FI:   C08L67/03 ZAB; C08K7/06; C08L25/04; C08L67/02; C08L69/00

According to International Patent Classification (IPC) or to both national classification and IPC

**B. FIELDS SEARCHED**

Minimum documentation searched (classification system followed by classification symbols)

C08L; C08K

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2022/124332 A1 (MITSUBISHI ENGINEERING PLASTICS CORP.) 16 June 2022 (2022-06-16)<br>      claims, paragraphs [0018], [0068], example 5 | 1-3, 7, 10-14 |
| Y | | 4-6, 8-9 |
| Y | JP 2014-133790 A (MITSUBISHI ENGINEERING PLASTICS CORP.) 24 July 2014 (2014-07-24)<br>      claims, paragraph [0033] | 4-6, 8-9 |
| P, X | WO 2022/202830 A1 (TOYOBO CO., LTD.) 29 September 2022 (2022-09-29)<br>      claims, examples 1-7 | 1, 3-6, 12-14 |
| A | WO 2021/256488 A1 (MITSUBISHI ENGINEERING PLASTICS CORP.) 23 December 2021 (2021-12-23)<br>      entire text | 1-14 |
| A | WO 2020/111011 A1 (MITSUBISHI ENGINEERING PLASTICS CORP.) 04 June 2020 (2020-06-04)<br>      entire text | 1-14 |

☑ Further documents are listed in the continuation of Box C.   ☑ See patent family annex.

| | |
|---|---|
| \*     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **21 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 553 115 A1**

<center>**INTERNATIONAL SEARCH REPORT**</center>

| International application No. |
| --- |
| **PCT/JP2023/023812** |

**C. DOCUMENTS CONSIDERED TO BE RELEVANT**

| Category* | Citation of document, with indication, where appropriate, of the relevant passages | Relevant to claim No. |
| --- | --- | --- |
| A | JP 2000-007902 A (POLYPLASTICS CO., LTD.) 11 January 2000 (2000-01-11)<br>entire text | 1-14 |
| A | JP 62-187759 A (CELANESE CORP.) 17 August 1987 (1987-08-17)<br>entire text | 1-14 |

Form PCT/ISA/210 (second sheet) (January 2015)

## INTERNATIONAL SEARCH REPORT
### Information on patent family members

International application No.

**PCT/JP2023/023812**

| Patent document cited in search report | | | Publication date (day/month/year) | Patent family member(s) | | | Publication date (day/month/year) |
|---|---|---|---|---|---|---|---|
| WO | 2022/124332 | A1 | 16 June 2022 | (Family: none) | | | |
| JP | 2014-133790 | A | 24 July 2014 | (Family: none) | | | |
| WO | 2022/202830 | A1 | 29 September 2022 | (Family: none) | | | |
| WO | 2021/256488 | A1 | 23 December 2021 | JP | 2022-104212 | A | |
| | | | | JP | 2022-104213 | A | |
| | | | | JP | 2022-104214 | A | |
| | | | | JP | 2022-8176 | A | |
| | | | | JP | 2022-8175 | A | |
| | | | | WO | 2021/256487 | A1 | |
| | | | | CN | 115700024 | A | |
| | | | | KR | 10-2023-0028389 | A | |
| | | | | TW | 202204520 | A | |
| | | | | TW | 202210587 | A | |
| | | | | CN | 115698185 | A | |
| | | | | KR | 10-2023-0028388 | A | |
| WO | 2020/111011 | A1 | 04 June 2020 | JP | 2020-84036 | A | |
| | | | | US | 2021/0395447 | A1 | |
| | | | | whole document | | | |
| | | | | JP | 2020-84037 | A | |
| | | | | JP | 2020-147662 | A | |
| | | | | JP | 2020-176158 | A | |
| | | | | JP | 2020-176159 | A | |
| | | | | EP | 3889214 | A1 | |
| | | | | CN | 113166490 | A | |
| | | | | KR | 10-2021-0095869 | A | |
| JP | 2000-007902 | A | 11 January 2000 | (Family: none) | | | |
| JP | 62-187759 | A | 17 August 1987 | EP | 180472 | A2 | |
| | | | | whole document | | | |

Form PCT/ISA/210 (patent family annex) (January 2015)

**REFERENCES CITED IN THE DESCRIPTION**

**Patent documents cited in the description**

- JP 2008163270 A
- JP 2020176159 A
- JP 2018070722 A
- JP 2019056035 A
- WO 2017038949 A
- JP 2013007058 A
- JP 2019123809 A